# FASCICULE DE BREVET EUROPEEN

(11) **EP 0 421 898 B1**
(45) Date de publication et mention de la délivrance du brevet: **04.01.1995**
(21) Numéro de dépôt: 90420425.2
(22) Date de dépôt: 01.10.1990
(51) Int. Cl.: H04M 1/03

(54) **Combiné téléphonique**
Fernsprechhandapparat
Telephone handset

(30) Priorité: 03.10.1989 FR 8913172
(43) Date de publication de la demande: 10.04.1991
(73) Titulaire: MONETEL, F-07500 Granges les Valence (FR)
(72) Inventeur: Jean, Yves, F-26120 Chabeuil (FR)
(74) Mandataire: de Beaumont, Michel

(56) Documents cités:
- DE-A- 3 516 290
- DE-B- 1 150 121
- GB-A- 2 190 562

## Description

La présente invention concerne un combiné téléphonique et plus particulièrement un combiné téléphonique ayant une structure qui le rend simple à fabriquer et robuste.

Un combiné téléphonique comprend un manche portant à une extrémité un microphone et à l'autre extrémité un écouteur. Le manche est généralement fabriqué à partir de plusieurs pièces et notamment de deux demi-coquilles qui sont assemblées après montage du câble de liaison et des conducteurs issus de ce câble pour se raccorder vers le microphone et l'écouteur (voir par exemple le combiné téléphonique divulgué dans le document GB-A-2 190 562). Quand on veut faire un téléphone particulièrement robuste, par exemple un téléphone adapté à un usage en cabine publique, le câble est généralement gainé de métal et son montage sur le combiné est une opération relativement complexe et qui prend du temps de fabrication quand on veut que ce montage puisse résister à des forces d'arrachement éventuellement importantes.

Ainsi, la présente invention propose une nouvelle structure de combiné téléphonique permettant de réduire les opérations de montage et d'obtenir une grande robustesse.

Pour atteindre cet objet, la présente invention prévoit un combiné téléphonique comprenant un corps plein ayant sensiblement la forme du combiné final, moulé de façon à inclure l'extrémité de la gaine du câble de liaison et les fils sortant de ce câble et ressortant du côté des embases des bonnettes de microphone et d'écouteur, et un surmoulage d'épaisseur sensiblement constante autour de ce corps, ce surmoulage comprenant des lèvres de positionnement des bonnettes.

Selon un mode de réalisation de la présente invention, le surmoulage comprend des cliquets et des ergots de maintien des bonnettes.

Selon un mode de réalisation de la présente invention, les bonnettes contiennent des moyens de maintien de l'écouteur et du microphone et sont raccordées aux fils sortant du corps avant montage sur le corps.

Selon un mode de réalisation de la présente invention, le câble de liaison est gainé de métal.

Selon un mode de réalisation de la présente invention, la gaine métallique est écrasée, soudée ou rainurée longitudinalement à son extrémité moulée dans le corps.

Selon un mode de réalisation de la présente invention, le corps est constitué d'une matière thermoplastique tel qu'un polystyrène.

Selon un mode de réalisation de la présente invention, le surmoulage est constitué d'ABS.

On notera qu'un avantage supplémentaire du combiné selon la présente invention est que, du fait que le manche est plein, on évite l'effet local apparaissant au niveau de l'écouteur et dû à la liaison acoustique dans un manche creux entre le microphone et l'écouteur.

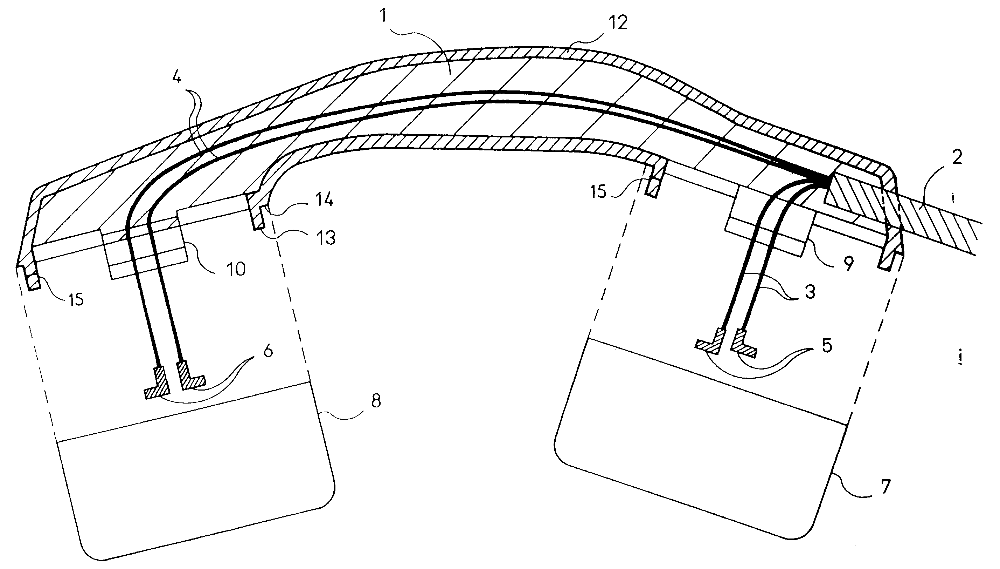

Ces objets, caractéristiques et avantages ainsi que d'autres de la présente invention seront exposés plus en détail dans la description suivante de modes de réalisation particuliers faite en relation avec la figure unique qui représente une vue partiellement en coupe et partiellement explosée d'un combiné téléphonique selon la présente invention.

Le combiné selon la présente invention comprend un corps plein 1 ayant sensiblement la forme que l'on souhaite conférer au manche du produit final.

Le corps 1 est obtenu par moulage autour de l'extrémité de la gaine 2 du câble de liaison et des fils de microphone 3 et d'écouteur 4. Ces fils sortent du corps sur une longueur qui peut être de l'ordre de quelques centimètres et se terminent par des cosses 5 et 6.

Le corps peut être constitué d'une matière thermoplastique telle qu'un styrène.

De préférence, l'extrémité de la gaine 2 du câble qui est généralement constituée d'un enroulement hélicoïdal de métal est aplatie, soudée ou rainurée longitudinalement dans la région qui doit être moulée dans le corps 1 pour éviter que l'on puisse la dévisser. On pourra également disposer, avant moulage, une plaque plane munie d'une ouverture en U à cheval sur la gaine du câble de liaison, cette plaque étant sensiblement orthogonale à la gaine, pour augmenter la résistance à l'arrachement.

Après fabrication du corps, celui-ci est à nouveau surmoulé pour être recouvert d'un revêtement 12 en une matière thermoplastique conférant au combiné téléphonique un aspect (couleur, état de surface ...) satisfaisant et améliorant sa solidité. Ce revêtement a une épaisseur sensiblement constante et est par exemple constitué d'une résine ABS d'une qualité lui permettant de résister aux chocs. Au niveau où seront montées les bonnettes de microphone 7 et d'écouteur 8, le revêtement 12 comprend des cliquets 9 et 10 ainsi que des saillies 13 en couronne et des épaulements 14 pour recevoir ces bonnettes. Il sera éventuellement prévu en certains emplacements de la couronne 13 des méplats (non représentés) et au moins un ergot 15 pour éviter toute possibilité de rotation de ces bonnettes.

De préférence, l'écouteur et le microphone sont mis en place dans les bonnettes respectives 7 et 8 puis ensuite fixés aux cosses 5 et 6. Après cela, les bonnettes sont positionnées autour des couronnes 13 et enfoncées pour s'encliqueter dans les cliquets 10 (les bonnettes présentent bien entendu des évidements complémentaires appropriées) et l'ergot 15 est déformé à chaud. Ainsi, une fois ces bonnettes mises en place, elles sont indémontables.

La structure décrite permet donc l'obtention d'un combiné téléphonique particulièrement robuste dans lequel le câble de liaison muni de sa gaine 2 est monté simplement, sans aucune manutention si ce n'est son insertion dans le moule destiné à la formation du corps 1.

L'homme de l'art pourra choisir les matériaux du corps 1 et du revêtement 12 en fonction de son expérience dans le domaine du moulage des matières plastiques. Il choisira également des microphones et écouteurs d'une robustesse adaptée au but final recherché qui est en particulier d'obtenir un combiné de cabine téléphonique susceptible de résister à des actes de vandalisme.

## Revendications

1. Combiné téléphonique caractérisé en ce qu'il comprend un corps plein (1) ayant sensiblement la forme du combiné final, moulé de façon à inclure l'extrémité de la gaine (2) du câble de liaison et les fils (3, 4) sortant de ce câble et ressortant du côté des embases des bonnettes de microphone et d'écouteur (7, 8), et un surmoulage (12) d'épaisseur sensiblement constante autour de ce corps, ce surmoulage comprenant des lèvres (13) de positionnement des bonnettes.

2. Combiné téléphonique selon la revendication 1, caractérisé en ce que le surmoulage comprend des cliquets (9, 10) et des ergots de maintien des bonnettes.

3. Combiné téléphonique selon la revendication 1, caractérisé en ce que les bonnettes (7, 8) contiennent des moyens de maintien de l'écouteur et du microphone et sont raccordées aux fils sortant du corps avant montage sur le corps.

4. Combiné téléphonique selon la revendication 1, caractérisé en ce que le câble de liaison est gainé de métal.

5. Combiné téléphonique selon la revendication 4, caractérisé en ce que la gaine métallique est écrasée, soudée ou rainurée longitudinalement à son extrémité moulée dans le corps.

6. Combiné téléphonique selon la revendication 1, caractérisé en ce que le corps est constitué d'une matière thermoplastique tel qu'un polystyrène.

7. Combiné téléphonique selon la revendication 1, caractérisé en ce que le surmoulage (12) est constitué d'ABS.

## Patentansprüche

1. Fernsprechhandapparat, dadurch gekennzeichnet, daß er einen Vollkörper (1) mit im wesentlichen der endgültigen Form des Handapparates aufweist, der derart geformt ist, daß er das Ende des Mantels (2) des Fernsprechverbindungskabels und die Drähte umschließt, die aus diesem Kabel austreten und in Richtung auf den jeweiligen Sitz der Mikrofon- und Hörkapselmuschel (7, 8) verlaufen, und daß er ferner einen Überzug (12) mit im wesentlichen konstanter Dicke um den Vollkörper aufweist, wobei dieser Überzug Positionierlippen (13) für die Muscheln aufweist.

2. Fernsprechhandapparat nach Anspruch 1, dadurch gekennzeichnet, daß der Überzug Klinken (9, 10) und Halterungen für die Muscheln aufweist.

3. Fernsprechhandapparat nach Anspruch 1, dadurch gekennzeichnet, daß die Muscheln (7, 8) Halteeinrichtungen für die Hörkapsel und das Mikrofon enthalten und mit den aus dem Körper austretenden Drähten vor dem Zusammenbau mit dem Körper verbunden werden.

4. Fernsprechhandapparat nach Anspruch 1, dadurch gekennzeichnet, daß das Fernsprechverbindungskabel mit Metall ummantelt ist.

5. Fernsprechhandapparat nach Anspruch 1, dadurch gekennzeichnet, daß der Metallmantel an seinem in den Körper eingeformten Ende in Längsrichtung gequetscht, geschweißt oder geriffelt ist.

6. Fernsprechhandapparat nach Anspruch 1, dadurch gekennzeichnet, daß der Körper aus einem thermoplastischen Material, wie Polystyrol, besteht.

7. Fernsprechhandapparat nach Anspruch 1, dadurch gekennzeichnet, daß der Überzug (12) aus ABS besteht.

## Claims

1. A telephone handset characterized in that it comprises a solid body (1) having substantially the shape of the final handset, molded so as to include the extremity of the sheath (2) of the connecting cable and the wires (3, 4) coming out from said cable and protruding at the mouthpiece and earpiece supports (7, 8), and an over-moulding (12) having a substantially constant thickness about said body, said over-moulding including lips (13) for positioning the mouthpiece and earpiece.

2. The telephone handset of claim 1, characterized in that the over-moulding includes clips (9, 10) for maintaining said mouthpiece and earpiece.

3. The telephone handset of claim 1, characterized in that said mouthpiece and earpiece (7, 8) include means for maintaining the microphone and the speaker, said pieces being connected to the wires coming out of the body before assembling on the body.

4. The telephone handset of claim 1, characterized in that the connecting cable is shielded by a metallic sheath.

5. The telephone handset of claim 1, wherein said metallic sheath is longitudinally flattened, welded or grooved at the end that is molded in said body.

6. The telephone handset of claim 1, characterized in that said body is made of a thermoplastic material such as polystyrene.

7. The telephone handset of claim 1, characterized in that said over-moulding (12) is made of ABS.
